Europäisches Patentamt

European Patent Office

Office européen des brevets

(19)

(11)  **EP 1 111 444 B1**

(12) **FASCICULE DE BREVET EUROPEEN**

(45) Date de publication et mention
de la délivrance du brevet:
**05.10.2005  Bulletin 2005/40**

(51) Int Cl.⁷: **G03B 13/36**, H04N 7/26,
H04N 101/00, H04N 5/232

(21) Numéro de dépôt: **00204466.7**

(22) Date de dépôt: **12.12.2000**

(54) **Appareil photographique comportant un dispositif de focalisation automatique**

Photoapparat mit automatischem Fokussierungsgerät

Photographic camera with an automatic focusing device

(84) Etats contractants désignés:
**DE FR GB**

(30) Priorité:  **21.12.1999  FR 9916135**

(43) Date de publication de la demande:
**27.06.2001  Bulletin 2001/26**

(73) Titulaire: **Koninklijke Philips Electronics N.V.
5621 BA Eindhoven (NL)**

(72) Inventeur: **Bompard, Frédéric
75008 Paris (FR)**

(74) Mandataire: **Chaffraix, Jean
Société Civile SPID,
156, Boulevard Haussmann
75008 Paris (FR)**

(56) Documents cités:
**EP-A- 0 944 263         FR-A- 2 711 813
US-A- 5 105 278**

EP 1 111 444 B1

## Description

L'invention concerne un appareil photographique comportant les caractéristiques listées dans la revendication 1.

L'invention concerne également un procédé de focalisation pour un appareil photographique tel que défini dans la revendication 5.

L'invention trouve son application dans les appareils photographiques numériques.

Il est connu, pour obtenir une bonne focalisation et donc une image nette, d'analyser les transitions dans l'image, car celles-ci sont souvent plus abruptes sur le sujet à photographier que sur le fond qui se trouve en arrière-plan. On estime que la distance focale de l'objectif de l'appareil photographique est optimale lorsque les transitions dans image sont les plus abruptes.

La présente invention propose un appareil photographique pour lequel la focalisation s'effectue d'une manière simple sans nécessiter trop de matériels supplémentaires et en s'affranchissant des fluctuations de niveau des différents filtres.

Pour cela, un tel appareil est remarquable en ce qu'il contient la caractéristique récitée dans la partie caractérisante de la revendication 1.

Un procédé de focalisation mis en oeuvre dans un appareil photographique comprenant un circuit de traitement d'images formé de filtre d'images passe-haut et passe-bas est remarquable en ce qu'il comprend l'étape récitée dans la partie caractérisante de la revendication 1.

- estimation de la valeur de la sortie d'au moins un desdits filtres passe-haut,
- normalisation de cette valeur au moyen de la valeur de la sortie d'un filtre passe-bas,
- commande du système de focalisation en vue d'obtenir une valeur maximale du signal normalisé,
- déclenchement pour la prise de photo, si la valeur normalisée dépasse un certain seuil.

L'invention s'applique bien aux techniques de compression d'image connues sous le nom de "techniques des ondelettes", telles que mentionnée dans la norme JPEG 2000, pour obtenir la mise au point automatique. La technique des ondelettes est bien connue. On pourra à ce sujet consulter le document de brevet européen EP 0 944 263 qui mentionne la nouvelle norme de compression des images JPEG 2000.

Le document FR-A-2 711 813 divulgue un procédé et dispositif de focalisation automatique d'un objectif.

La description suivante, en regard des dessins ci-annexés, le tout donné à titre d'exemple non limitatif, fera bien comprendre comment l'invention peut être réalisée. Sur les dessins :

La FIG.1 représente par un appareil conforme à l'invention.

La FIG.2 représente un organigramme de fonctionnement de l'appareil conforme à l'invention.

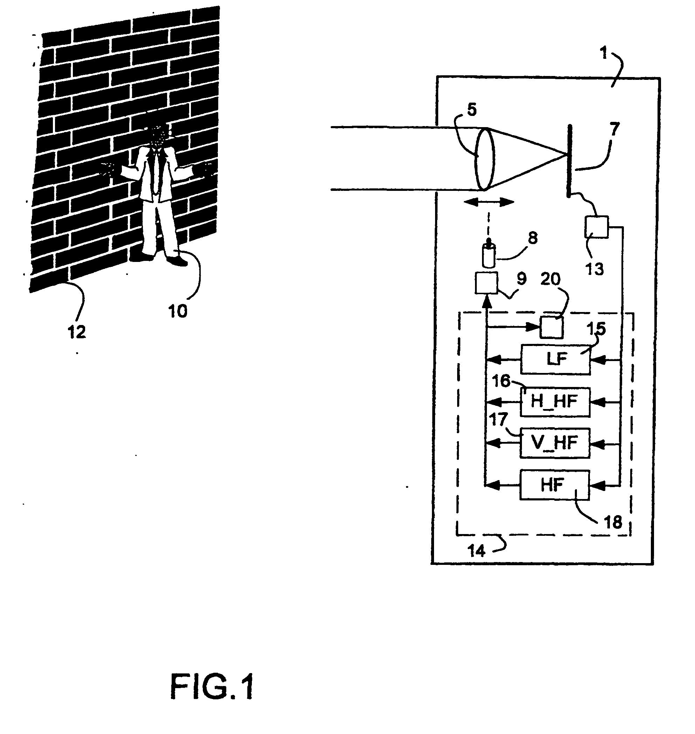

La figure 1 représente un appareil 1 conforme à invention. Cet appareil est formé d'un objectif 5 qui focalise les images sur une surface sensible 7 du type capteur CCD. La distance focale de l'objectif peut changer sous l'influence d'un moteur 8 commandé par un circuit de commande 9 de sorte que le sujet 10 placé devant un fond 12 puisse apparaître net sur la surface sensible 7. Cette surface est analysée par un circuit d'analyse 13 pour fournir une information sur les différents pixels la composant. Ces pixels sont ensuite traités en vue d'effectuer une compression d'image par un dispositif de traitement d'image 14 utilisant une transformation en ondelettes. Des filtres d'image 15, 16, 17 et 18 sont réalisés par une simple sommation des résultats de la transformation en ondelettes. Après compression, l'image captée est emmagasinée dans un dispositif de mémorisation 20.

Selon invention, on profite de la présence de ces filtres d'image pour obtenir la focalisation qui assure la netteté du sujet sur la surface sensible 7. Ceci peut être déduit des informations provenant d'un filtre d'image passe-bas 15 et d'un filtre passe-haut 16. Un sujet net crée des transitions nettes qui apportent une contribution à la sortie des filtres passe-haut, alors que le fond situé plus loin reste flou et sa contribution est donc plus faible. Tous ces filtres peuvent être à une ou deux dimensions.

De ces quatre sommateurs 15, 16, 17 et 18, on établit quatre paramètres : $\alpha$, $\beta$, $\chi$ et $\delta$ respectivement relatifs aux informations de luminance Y :

$$\alpha = \sum_{LF} Y$$

$$\beta = \sum_{H\_HF} Y$$

$$\chi = \sum_{V\_HF} Y$$

$$\delta = \sum_{HF} Y$$

On estime que le sujet 10 paraît net sur la surface 7 lorsque la sortie d'au moins un filtre d'image haute fréquence ($\beta$, $\chi$ ou $\delta$) est maximal. On utilise la sortie du filtre image basse fréquence 15 pour s'affranchir des variations de niveau et normaliser en quelque sorte, la valeur des signaux à la sortie des filtres β, χ ou δ.

Selon un exemple de réalisation, il y aura une image nette lorsque la valeur $HF_C$ sera maximale :

$$HF_C = \frac{\beta + \chi + \delta}{\alpha}$$

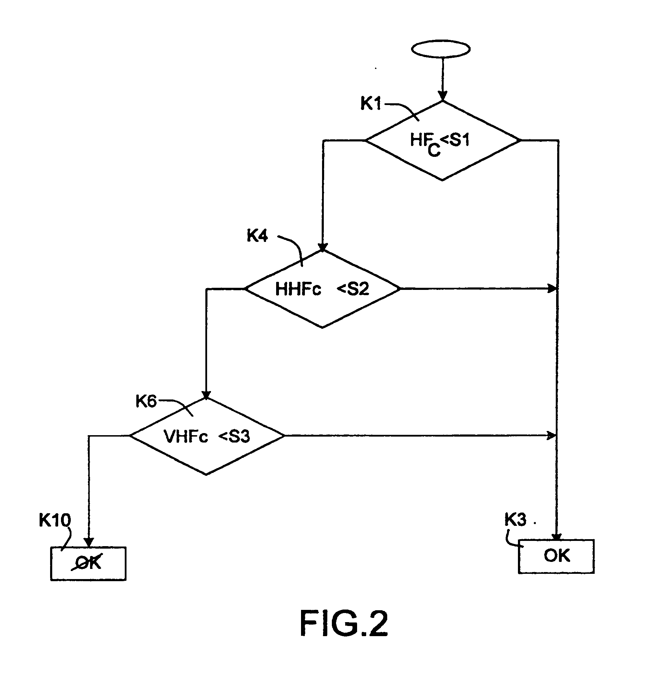

Dans d'autres cas, on mettra en oeuvre un fonctionnement explicité par l'organigramme de la figure 2.

On examine d'abord (case K1), la valeur du maximum $HF_C$, obtenu par le mouvement de l'objectif 5. Si ce maximum est supérieur à un certain seuil, la photo est prise ce qui est indiqué par la case K3. Si cette valeur est inférieure à ce seuil, alors on examine (case K4) la valeur maximale que prend la valeur $HHF_C$ :

$$HHF_c = \frac{\beta}{\alpha}$$

Si cette valeur atteint un maximum supérieur à un certain seuil S2, alors on va à la case K3, sinon on examine (case K6) la valeur $VHF_C$ :

$$VH_c = \frac{\chi}{\alpha}$$

Si cette valeur atteint une valeur supérieure à un seuil S3, la photo est enregistrée (case K3), sinon un message ou tout autre indicateur signale que la mise au point ne peut pas être faite (case K10).

Il va de soi que les traitements décrits se font d'une manière préférée sur une partie de l'image située au centre de la surface sensible 7, ceci facilitant l'utilisation de l'appareil.

## Revendications

1.  Appareil photographique comportant :

    -   un système d'objectif (5) pour focaliser l'image d'un sujet sur une plaque sensible (7),
    -   un dispositif de traitement d'image utilisant une pluralité de filtres de traitement d'image (15, 16, 17, 18..) pour la mise en oeuvre d'une transformation de compression d'images dont au moins un premier filtre passe-haut (16) et un premier filtre passe-bas (15) constitués par des sommateurs sur les résultats de la transformation de compression,
    -   un système d'asservissement agissant sur le système d'objectif pour assurer une image nette du sujet sur ladite plaque sensible en rendant maximal le signal de sortie d'au moins un des filtres passe-haut (16, 17, 18),

    appareil **caractérisé en ce que** le système d'asservissement est arrangé de manière à ce que le signal à la sortie du filtre passe-bas (15) soit utilisé pour normaliser la ou les valeurs de sortie des autres filtres de façon à s'affranchir des variations de niveau des dit autres filtres.

2.  Appareil photographique selon la revendication 1, comportant une pluralité de filtres passe-haut (16, 17, 18), **caractérisé en ce que** la valeur du signal de sortie d'au moins un de ces filtres est divisée par la valeur du signal à la sortie du filtre passe-bas (15).

3.  Appareil photographique selon la revendication 1 ou 2, **caractérisé en qu'**il comporte un dispositif de traitement d'image (14) utilisant lesdits filtres pour effectuer une compression dites des ondelettes.

4.  Appareil photographique selon la revendication 1 ou 2, **caractérisé en qu'**il comporte un dispositif de traitement d'image (14) utilisant lesdits filtres pour effectuer une compression répondant à la norme JPEG2000.

5.  Procédé mis en oeuvre dans un appareil selon l'une des revendications 1 à 4, **caractérisé en ce qu'**il comporte les étapes suivantes :

    -   estimation de la valeur de la sortie d'au moins un desdits filtres passe-haut,
    -   normalisation de cette valeur au moyen de la valeur de la sortie d'un filtre passe-bas,
    -   commande du système de focalisation en vue d'obtenir une valeur maximale du signal normalisé,
    -   déclenchement pour la prise de photo, si la valeur normalisée dépasse un certain seuil.

6.  Procédé selon la revendication 5 mis en oeuvre dans un appareil selon l'une des revendications 1 à 4 comportant en outre un autre filtre passe-haut **caractérisé en ce que** :

    -   estimation d'une autre valeur provenant d'un desdits filtre passe-haut,
    -   déclenchement pour la prise de photo, si cette autre valeur dépasse un seuil,
    -   prise en compte d'une autre sortie d'un autre filtre passe-haut si ce dernier seuil n'est pas dépassé.

## Patentansprüche

1.  Fotoapparat mit :

    -   einem Objektivsystem (5) zur Fokussierung des Objektbildes auf einer empfindlichen Platte (7),

- einer Anordnung zur Bildbehandlung unter Verwendung einer Vielzahl von Bildverarbeitungsfiltem (15, 16, 17, 18...) für die Umsetzung einer Transformation von Bilderkompressionen, worunter mindestens einem ersten Hochpassfilter (16) und einem ersten Tiefpassfilter (15), gebildet aus Summenbildnern der Ergebnisse der Kompressionstransformation,
- einem Verriegelungssystem, welches auf das Objektivsystem einwirkt, um ein scharfes Bild des Objekts auf der besagten empfindlichen Platte zu versichern, indem das Ausgangssignal von mindestens einem der Hochpassfilter (16, 17, 18) maximal ausgegeben wird,

einem **dadurch gekennzeichnet**en Apparat, dass sein Verriegelungssystem derart angeordnet ist, um das Ausgangssignal des Tiefpassflters (15) zur Normalisierung des oder der Werte am Ausgang der anderen Filter zu verwenden, um sich der Niveauvariationen der anderen Filter zu entledigen.

2. Fotoapparat nach Anspruch 1 mit einer Vielzahl von Hochpassfiltern (16, 17, 18), **dadurch gekennzeichnet, dass** der Wert des Ausgangssignals von mindestens einem dieser Filter durch den Wert des Signals am Ausgang des Tiefpassfilters (15) geteilt wird.

3. Fotoapparat nach Anspruch 1 oder 2, **dadurch gekennzeichnet, dass** er eine Anordnung zur Bildverarbeitung (14) unter Verwendung der besagten Filter zum Ausführen einer sogenannten Wellchen-Kompression enthält.

4. Fotoapparat nach Anspruch 1 oder 2, **dadurch gekennzeichnet, dass** er eine Anordnung zur Bildverarbeitung (14) unter Verwendung der besagten Filter zum Ausführen einer der Norm JPEG2000 entsprechenden Kompression enthält.

5. In einem Apparat nach einem der Ansprüche 1 bis 4 eingesetztes Verfahren, **dadurch gekennzeichnet, dass** es folgende Schritte enthält :

- Schätzung des Ausgangswerts von mindestens einem der besagten Hochpassfilter,
- Normalisierung dieses Werts anhand des Ausgangswerts eines Tiefpassfilters,
- Steuerung des Fokussierungssystems hinsichtlich des Erhalts eines maximalen Werts des normalisierten Signals,
- Auslösung für die Fotoaufnahme, wenn der normalisierte Wert einen bestimmten Grenzwert übersteigt.

6. Verfahren nach Anspruch 5, in einem Apparat entsprechend den Ansprüchen 1 bis 4 eingesetzt, welches außerdem einen anderen Hochpassfilter enthält, **gekennzeichnet durch** die :

- Bewertung eines anderen Werts, der aus einem der besagten Hochpassfilter kommt,
- Auslösung für die Fotoaufnahme, wenn dieser andere Wert einen Grenzwert übersteigt,
- Berücksichtigung eines anderen Ausgangs eines anderen Hochpassfilters, wenn dieser letztere Grenzwert nicht überschritten wird.

**Claims**

1. A camera comprising:

- a lens system (5) for focusing the image of a subject on a sensitive plate (7),
- an image processing device utilizing a plurality of image processing filters (15, 16, 17, 18...) for performing an image compression transformation, of which at least a first high-pass filter (16) and a first low-pass filter (15) constituted by summators from the results of the compression transformation,
- a control system acting on the lens system to ensure a sharp picture of the subject on the sensitive plate by rendering the output signal of at least one of the high-pass filters (16, 17, 18) high,

which camera is **characterized in that** the control system is arranged so that the signal at the output of the low-pass filter (15) is used for normalizing the output value(s) of the other filters so that level variations of the other filters are canceled.

2. A camera as claimed in claim 1, comprising a plurality of high-pass filters (16, 17, 18), **characterized in that** the value of the output signal of at least one of these filters is divided by the value of the output signal of the low-pass filter (15).

3. A camera as claimed in claim 1 or 2, **characterized in that** it comprises an image processing device (14) which utilizes said filters to effect a what is called wavelet compression.

4. A camera as claimed in one of the claims 1 or 2, **characterized in that** it comprises an image processing device (14) which utilizes said filters to effect a compression that satisfies the JPEG2000 standard.

5. A method implemented in a camera as claimed in one of the claims 1 to 4 **characterized in that** it comprises the following steps:

- estimation of the value of the output of at least one of said high-pass filters,
- normalizing of this value by means of the value of the output of a low-pass filter,
- control of the focusing system with a view to obtaining a maximum value of the normalized signal,
- release for taking the photo if the normalized value exceeds a certain threshold.

6. A method as claimed in claim 5 implemented in a camera as claimed in one of the claims 1 to 4, further comprising another high-pass filter, **characterized by**

- estimation of another value coming from one of said high-pass filters,
- release for taking the photo if this other value exceeds a threshold,
- taking another output of another high-pas filter into account if the latter threshold is not exceeded.

FIG.1

FIG.2